# EUROPÄISCHE PATENTSCHRIFT

(11) **EP 2 411 936 B1**
(45) Veröffentlichungstag und Bekanntmachung des Hinweises auf die Patenterteilung: **11.01.2017**
(21) Anmeldenummer: 10710839.1
(22) Anmeldetag: 23.03.2010
(51) Int. Cl.: G06F 21/83, G06F 21/85

(54) **VERFAHREN UND VORRICHTUNG ZUR SICHEREN VERARBEITUNG VON EINGABEDATEN**
METHOD AND DEVICE FOR SECURELY PROCESSING INPUT DATA
PROCÉDÉ ET DISPOSITIF DE TRAITEMENT SÉCURISÉ DE DONNÉES D'ENTRÉE

(30) Priorität: 24.03.2009 DE 102009014572
(43) Veröffentlichungstag der Anmeldung: 01.02.2012
(73) Patentinhaber: Giesecke & Devrient GmbH, 81677 München (DE)
(72) Erfinder: FINKENZELLER, Klaus, 85774 Unterföhring (DE)
(86) Internationale Anmeldenummer: PCT/EP2010/053761
(87) Internationale Veröffentlichungsnummer: WO 2010/108911

(56) Entgegenhaltungen:
- EP-A1- 1 494 103
- EP-A2- 1 035 461
- WO-A1-99/61989
- DE-A1-102005 008 433
- US-A1- 2002 070 920
- ISOLDE RÖTZER: 'Elektronisch signieren am Terminal', [Online] 31 Dezember 2003, XP055251715 Gefunden im Internet: <URL:http://www.archiv.fraunhofer.de/archiv /magazin/pflege.zv.fhg.de/german/publicatio ns/df/df2003/mag2-2003-16.pdf> [gefunden am 2016-02-19]

## Beschreibung

Die vorliegende Erfindung betrifft ein Verfahren auf einem sicheren Transaktionsmodul zum manipulationsfreien Verarbeiten von in ein Nutzerendgerät von einem Nutzer eingegebenen Eingabedaten als Transaktionsdaten sowie einen derartiges sicheres Transaktionsmodul.

Im Zusammenhang mit dem Anweisen von Transaktionen auf einer Transaktionseinrichtung, z.B. einem Online-Banking-Server einer Bank oder dergleichen, durch ein mit der Transaktionseinrichtung über ein Datenkommunikationsnetzwerk verbundenes Nutzerendgerät gibt ein Nutzer häufig sicherheitskritische oder vertrauliche Eingabedaten über eine Eingabeeinrichtung, wie z.B. eine Tastatur, in das Nutzerendgerät ein, damit diese anschließend über das Datenkommunikationsnetzwerk als Transaktionsdaten an die Transaktionseinrichtung weitergeleitet werden. Derartige sicherheitskritische oder vertrauliche Eingabedaten können z.B. persönliche Identifikationsnummern (PIN), Transaktionsnummern (TAN) oder weitere Transaktionsdaten sein, wie z.B. Kreditkartennummern, Bankverbindungen, Überweisungsbeträge oder dergleichen.

Hierbei besteht das prinzipielle Problem, dass sowohl persönliche oder öffentliche, mit Tastatur und Bildschirm ausgestattete Nutzerendgeräte, wie z.B. Personalcomputer, Laptops oder dergleichen, als auch das Datenkommunikationsnetzwerk in der Regel unsicher und insofern anfällig für Schadsoftware sind, wie z.B. Viren, Würmer, Trojaner, Spyware oder dergleichen, die die vertraulichen Eingabedaten abhören oder gar derart manipulieren können, dass anstelle der von dem Nutzer bezweckten Transaktion eine unerwünschte Transaktion zugunsten eines unberechtigten Dritten ausgeführt wird, ohne dass dies für den Datenträger oder die Transaktionseinrichtung zu erkennen wäre.

Zur Absicherung der Datenkommunikation zwischen dem Nutzerendgerät und der Transaktionseinrichtung sind mit dem Nutzerendgerät verbindbare portable Datenträger bekannt, die eine sichere Datenkommunikationsverbindung zwischen dem Nutzerendgerät und der Transaktionseinrichtung bereitstellen. Hierzu eignet sich z.B. eine so genannte "Internet Smart Card", die über eine USB-Schnittstelle an das Nutzerendgerät anschließbar ist und die gesamte Datenkommunikation zu und von der Transaktionseinrichtung kryptographisch sichert. In der Regel umfasst eine solche Internet Smart Card einen eigenen Webserver, der dem Benutzer über einen Webbrowser des Nutzerendgeräts Webseiten bereitstellt, beispielsweise Eingabeformulare, über die eingegebene Eingabedaten unmittelbar als Transaktionsdaten kryptographisch gesichert an die Transaktionseinrichtung weitergeleitet werden. Allerdings wird eine Manipulation von Eingabedaten durch eine Schadsoftware mit einer solchen Internet Smart Card nicht verhindert oder erkannt.

In diesem Zusammenhang offenbart die WO 2006/089710 einen portablen Datenträger, der zwischen ein Nutzerendgerät und dessen Tastatur geschaltet wird und in einem bestimmten Betriebsmodus über die Tastatur eingegebene, insbesondere sicherheitskritische oder vertrauliche Eingabedaten abfängt und unmittelbar verarbeitet, beispielsweise verschlüsselt an ein externes System weiterleitet und/oder zur Authentisierung des Benutzers einsetzt. Dies hat jedoch den Nachteil, dass Eingabedaten zumindest teilweise nicht an das Nutzerendgerät weitergeleitet und in der vom Benutzer beabsichtigten Weise in ein Webformular eingetragen werden, so dass insbesondere eine Darstellung und visuelle Kontrolle der Eingabedaten über einen Webbrowser nicht möglich ist. In US 2002/0070920 A1 wird die Übergabe von Tastatureingaben an einen Rechner abgesichert. WO 99/61989 A1 zeigt den Oberbegriff von Anspruch 1 und eine Verifikation der zu verarbeitenden Transaktionsdaten durch den Benutzer.

Demzufolge ist es die Aufgabe der vorliegenden Erfindung, dem Benutzer eine komfortable Eingabe von Eingabedaten zu ermöglichen und gleichzeitig eine Manipulation der Eingabedaten auf dem Nutzerendgerät zu verhindern.

Diese Aufgabe wird durch ein Verfahren sowie ein Transaktionsmodul mit den Merkmalen der unabhängigen Patentansprüche gelöst. In den davon abhängigen Ansprüchen sind vorteilhafte Ausgestaltungen und Weiterbildungen der Erfindung angegeben.

In einem sicheren Transaktionsmodul werden Eingabedaten von einer Eingabedateneinrichtung eines Nutzerendgeräts empfangen, z.B. von einer Tastatur. Erfindungsgemäß werden Transaktionsdaten, die das Transaktionsmodul von dem Nutzerendgerät empfängt, transaktionsgemäß verarbeitet, wenn ein Abgleich der empfangenen, eventuell manipulierten Transaktionsdaten mit den empfangenen, tatsächlichen Eingabedaten des Nutzers ein positives Abgleichsergebnis ergibt.

Eine transaktionsgemäße Verarbeitung kann in der Weiterleitung der Transaktionsdaten an eine Transaktionseinrichtung bestehen. Alternativ oder ergänzend können als transaktionsgemäße Verarbeitung die Transaktionsdaten als transaktionsgemäße Verarbeitung signiert und/oder verschlüsselt werden. Ebenso kann als transaktionsgemäße Verarbeitung eine der Transaktion zugeordnete Transaktionsnummer, beispielsweise eine Transaktionsfreigabenummer (TAN) oder ein Einmalpasswort (OTP), erzeugt werden. Das Transaktionsmodul kann insbesondere eine Signatur über die Transaktionsdaten und/oder die Transaktionsnummern an die Transaktionseinrichtung leiten, ohne die Transaktionsdaten senden zu müssen.

Ein entsprechender erfindungsgemäßer portabler Datenträger (oder ein entsprechendes sicheres Hardware-Transaktionsmodul) umfasst zumindest einen Prozessor, einen Datenspeicher sowie eine Steuereinrichtung, die einerseits von einer mit dem Datenträger verbundenen Eingabedateneinrichtung empfangene Eingabedaten in dem Datenspeicher speichert und vorzugesweise an ein mit dem Datenträger verbundenes Nutzerendgerät weiterleitet und andererseits von dem Nutzerendgerät empfangene Transaktionsdaten mit den gespeicherten Eingabedaten abgleicht und nur bei einem positiven Abgleichsergebnis dann an eine Transaktionseinrichtung weiterleitet.

Der Abgleich der Eingabedaten mit den Transaktionsdaten repräsentiert hierbei eine Prüfung, ob die Transaktionsdaten in einer vorgegebenen Beziehung zu den Eingabedaten stehen. Dadurch wird sichergestellt, dass von einer Schadsoftware manipulierte Transaktionsdaten nicht mehr die vorgegebene Beziehung zu den Eingabedaten aufweisen und demzufolge nicht an die Transaktionseinrichtung weitergeleitet, sondern verworfen werden.

Vorzugsweise werden die Eingabedaten bzw. Transaktionsdaten in mehreren Eingabedatenempfangsschritten bzw. Transaktionsdatenempfangsschritten als Eingabedatenanteile bzw. Transaktionsdatenanteile empfangen, wobei jeweils einander zugeordnete Eingabedatenanteile und Transaktionsdatenanteile miteinander abgeglichen werden. Der einem Eingabedatenanteil entsprechende Transaktionsdatenanteil kann hierbei insbesondere ein mit dem Eingabedatenanteil in einem bestimmten zeitlichen Zusammenhang empfangener Transaktionsdatenanteil sein, beispielsweise der nächste nach dem Eingabedatenanteil empfangene Transaktionsdatenanteil oder dergleichen. Vorzugsweise entspricht die Reihenfolge, in der Eingabedatenanteile empfangen werden, genau der Reihenfolge, in der Transaktionsdatenanteile empfangen werden, so dass sich allein dadurch eine ausreichend genaue Zuordnung ergibt. Alternativ oder zusätzlich könnten der Eingabedatenanteil und der entsprechende Transaktionsdatenanteil durch eine vorgegebene inhaltliche Beziehung einander zugeordnet sein.

Da die Eingabedaten und Transaktionsdaten in der Regel alphanumerische Zeichenfolgen sind, wird als Eingabedatenanteil vorzugsweise zumindest ein alphanumerisches Eingabedatenzeichen der Eingabedaten, z.B. ein von dem Benutzer über die Eingabeeinrichtung eingegebener Buchstabe oder eine Zahl, und als Transaktionsdatenanteil zumindest ein alphanumerisches Transaktionsdatenzeichen der Transaktionsdaten empfangen. Ebenso kann die Steuereinrichtung des Datenträgers in einem ersten Transaktionsdatenempfangsschritt ein einzelnes Transaktionsdatenzeichen und in jedem weiteren Transaktionsdatenempfangsschritt eine Transaktionsdatenzeichenfolge empfangen, die alle Transaktionsdatenzeichen der im vorhergehenden Transaktionsdatenempfangsschritt empfangenen Transaktionsdatenzeichenfolge sowie ein weiteres, neues Transaktionsdatenzeichen umfasst. Dies ist beispielsweise dann der Fall, wenn die Steuereinrichtung jedes empfangene Eingabedatenzeichen einzeln an das Nutzerendgerät weiterleitet und das Nutzerendgerät jedem einzeln empfangenen Eingabedatenzeichen ein Transaktionsdatenzeichen zuordnet, in eine Transaktionsdatenzeichenfolge aus bereits empfangenen Eingabezeichen einfügt und die gesamte Transaktionsdatenzeichenfolge an den Datenträger zurückleitet.

In diesem Zusammenhang bestimmt die Steuereinrichtung in einer in einem Transaktionsdatenempfangsschritt empfangenen Transaktionsdatenzeichenfolge das weitere, neue Transaktionsdatenzeichen durch Vergleichen der Transaktionsdatenzeichen der empfangenen Transaktionsdatenzeichenfolge mit den Transaktionsdatenzeichen der im vorherigen Transaktionsdatenempfangsschritt empfangenen Transaktionsdatenzeichenfolge und gleicht das bestimmte, weitere Transaktionsdatenzeichen mit einem entsprechenden als Eingabedaten empfangenen Eingabedatenzeichen ab.

Weiterhin bestimmt die Steuereinrichtung innerhalb einer empfangenen Transaktionsdatenzeichenfolge die Position eines weiteren, neuen Transaktionsdatenzeichens durch Vergleichen der empfangenen Transaktionsdatenzeichenfolge mit der im vorherigen Transaktionsdatenempfangsschritt empfangenen Transaktionsdatenzeichenfolge. Durch eine Auswertung der Positionen, an denen jeweils neue Transaktionsdatenzeichen in eine Transaktionsdatenzeichenfolge eingefügt werden, wird geprüft, ob diese Positionen in einem vorgegebenen bzw. zu erwartenden, vernünftigen Zusammenhang mit der Transaktionsdatenzeichenfolge stehen. So kann beispielsweise ein auf dem Datenträger eingerichteter Positionswechselzähler bei einem auffälligen Positionswechsel inkrementiert werden, z.B. wenn auf die in einem Transaktionsdatenempfangsschritt bestimmte Position eines weiteren Transaktionsdatenzeichens die im vorhergehenden Transaktionsdatenempfangsschritt bestimmte Position folgt, d.h. wenn ein weiteres, neues Transaktionsdatenzeichen nicht am Ende einer Transaktionsdatenzeichenfolge angefügt wird.

Auf diese Weise wird protokolliert, wie oft die Steuereinrichtung eine Transaktionsdatenzeichenfolge empfängt, die ein nicht am Ende angefügtes sondern in der Mitte eingefügtes neues Transaktionsdatenzeichen umfasst, was bei Annahme einer üblichen sequentiellen Eingabeweise von Eingabe-/Transaktionsdaten durch einen Benutzer auf eine Korrektur in der Mitte der bisher eingegebenen Transaktionsdatenzeichenfolge schließen lässt.

Dementsprechend könnte eine einen vorgegebenen Schwellenwert überschreitende Anzahl solcher unüblichen, von einer sequentiellen Eingabeweise abweichenden Positionswechsel auf eine Manipulation der Transaktionsdaten durch eine auf dem Nutzerendgerät vorliegende Schadsoftware hindeuten, die durch Umsortieren bzw. Permutieren der von einem Benutzer sequentiell eingegebenen Eingabedaten die Transaktionsdaten derart manipuliert, dass nicht die von dem Benutzer gewünschte Transaktion, sondern eine unerwünschte Transaktion zugunsten eines unberechtigten Dritten von der Transaktionseinrichtung ausgeführt werden würde. Dabei ist der Schwellenwert derart eingestellt, dass er eine realistische Anzahl von Korrekturen bei der Dateneingabe wiedergibt, so dass ein Überschreiten dieses Schwellenwerts realistischerweise auf eine Schadsoftware zurückgeführt werden kann. In diesem Fall wird der Abgleich der Transaktionsdaten mit den Eingabedaten mit einem negativen Abgleichsergebnis abgebrochen.

Ein positives Abgleichsergebnis ergibt sich demgegenüber vorzugsweise dann, wenn die Transaktionsdatenanteile mit den jeweils entsprechenden Eingabedatenanteilen übereinstimmen, d.h., wenn jedes weitere, neue Transaktionsdatenzeichen einem identischen Eingabedatenzeichen zugeordnet werden kann. Diese Transaktionsdatenanteile werden von der Steuereinrichtung vorzugsweise nur dann als Transaktionsdaten an die Transaktionseinrichtung weitergeleitet, wenn sie derart vollständig vorliegen, dass sie eine von der Transaktionseinrichtung unmittelbar ausführbare Transaktion definieren. Dies ist vorzugsweise immer dann der Fall, wenn die Transaktionseinrichtung alle zur Ausführung einer Transaktion benötigten Angaben aus den Transaktionsdatenanteilen entnehmen bzw. ableiten kann.

In einer besonders bevorzugten Ausführungsform leitet die Steuereinrichtung des Datenträgers die Eingabedaten zur Anzeige auf einer Anzeigeeinrichtung des Nutzerendgeräts an dieses weiter. Die Eingabedaten können hierbei beispielsweise in einem von einem Webbrowser des Nutzerendgeräts dargestellten Webformular angeordnet werden, dass speziell ausgestaltet ist, um Transaktionsdaten entgegenzunehmen und weiterzuleiten. Ein solches Webformular kann beispielsweise von einer Transaktionseinrichtung oder von einem Webserver des Datenträgers auf dem Webbrowser des Nutzerendgeräts bereitgestellt werden, wobei nur solche Eingabedatenanteile bei einem Abgleich der Transaktionsdatenanteile mit jeweils entsprechenden Eingabedatenanteilen berücksichtigt werden, die in das Webformular eingegeben wurden.

Da ein von dem Webserver zur Verfügung gestelltes Webformular bevorzugt wie ein übliches von einer Servereinrichtung im Internet, z.B. einer Transaktionseinrichtung mit Webserver, bereitgestelltes Webformular von einem Webbrowser des Nutzerendgerätes angezeigt wird, kann der Benutzer die gewünschten Eingabedaten unter Verwendung der gewohnten Dateneingabefunktionalitäten des Nutzerendgerätes in das Webformular eingeben. Indem das Webformular von dem Datenträger und nicht einer beliebigen Servereinrichtung im Internet bereitgestellt wird, können einerseits Manipulationen an dem Webformular verhindert werden und andererseits können die in das Webformular eingegebenen Eingabedaten nach einem erfolgreichen Abgleich unmittelbar aus dem Webformular heraus als kryptographisch gesicherte Transaktionsdaten an den Transaktionsserver weitergeleitet werden. Dies kann vorzugsweise über das Nutzerendgerät und dessen Datenkommunikationsschnittstelle zu der Transaktionseinrichtung erfolgen.

Die Steuereinrichtung erkennt in das Webformular eingegebene Eingabedatenanteile vorzugsweise daran, dass deren Eingabedatenzeichen einem von dem Webformular für die Transaktionsdaten vorgegebenen Transaktionsdatenzeichenalphabet entsprechen, z.B. einem nur aus Ziffern bestehenden Zeichenalphabet oder dergleichen. Auf diese Weise kann die Steuereinrichtung z.B. erkennen, dass innerhalb der Eingabedatenzeichenfolge "RAPUNZEL5" lediglich die Ziffer "5" ein reguläres Transaktionszeichen darstellen kann und als solches in das Webformular eingegeben und von der Steuereinrichtung empfangen werden kann.

Dementsprechend kann ein von einer Zeigeeinrichtung des Nutzerendgeräts, z.B. einer von der Eingabeeinrichtung unabhängigen Maus oder dergleichen, bewirkter Aktivierungswechsel zwischen dem betreffenden Webformular bzw. dem das Webformular anzeigenden Webbrowser und weiteren auf der Anzeigeeinrichtung angezeigten Applikationsfenstern z.B. daran erkannt werden, dass die Eingabedatenanteile zwischen dem vorgegebenen Transaktionsdatenzeichenalphabet und einem anderen, von einem anderen Applikationsfenster erwarteten Zeichenalphabet wechseln.

Gemäß einer bevorzugten Ausführungsform wird zwischen den in das Webformular eingegebenen Eingabedatenanteilen und in ein anderes Applikationsfenster eingegebenen Daten anhand von Steueranweisungen unterschieden, die die Steuereinrichtung von der Eingabedateneinrichtung oder von einer mit dem Datenträger verbundenen Zeigeeinrichtung empfängt und die einen Aktivierungswechsel zwischen dem Webformular (oder dem das Webformular anzeigenden Webbrowser) und weiteren auf der Anzeigeeinrichtung angezeigten Applikationsfenstern bewirken. Im Zusammenhang mit einer Eingabeeinrichtung, wie. z.B. einer Tastatur, können solche einen Aktivierungswechsel angebende Steueranweisungen insbesondere Tastenkombinationen sein die ALT- oder STRG-Steuerzeichen umfassen. Bei einer Zeigeeinrichtung, z.B. einer Maus oder dergleichen, können entsprechend Mausklicks oder Events abgefangen und ausgewertet werden.

Vorzugsweise ist auf dem Datenträger ein Aktivierungswechselzähler eingerichtet, der inkrementiert wird, wenn die Steuereinrichtung einen Aktivierungswechsel feststellt. Sofern der Aktivierungswechselzähler einen Schwellenwert überschreitet, der eine vernünftige und realistische Anzahl von Aktivierungswechseln durch einen Benutzer während der Eingabe von Transaktionsdaten in ein Webformular wiedergibt, wird der Abgleich der Transaktionsdaten mit den Eingabedaten mit einem negativen Abgleichsergebnis abgebrochen, da dann davon ausgegangen werden kann, dass eine auf dem Nutzerendgerät installierte Schadsoftware die Transaktionsdaten durch Vortäuschen von Aktivierungswechseln manipuliert.

Ein Einfügen von Zeichen in die Transaktionsdaten über die Zwischenablage könnte zu Transaktionsdaten führen, die nicht in den Eingabedaten enthalten sind. Deshalb ist das Formular für die Eingabe der Daten durch den Nutzer vorzugsweise dazu angepasst, keine Einfügungen aus der Zwischenablage zuzulassen. Gemäß einer weiteren bevorzugten Ausführungsform werden Einfügungen durch das Transaktionsmodul erkannt und durch eine Eingabeaufforderung zur Eingabe zumindest eines Teils der empfangenen Transaktionsdaten als einzelne Zeichen auf der Eingabeeinrichtung beantwortet. Somit wird sichergestellt, dass zumindest dieser Teil der Transaktionsdaten mit Eingabedaten abgeglichen werden kann. Beispielsweise die Steueranwesung STRG-V oder auch die entsprechende Klickkombination mit einer Maus kann in den Eingabedaten erkannt werden. Der einzugebende Teil kann bestimmt werden als der Eingabedatenanteil, der von der Einfügeanweisung betroffen ist. Beispielsweise wenn das Transaktionsmodul nach jedem Zeichen die geänderten Transaktionsdaten empfängt, ist für das Transaktionsmodul sowohl die Einfügung als auch der betroffene Transaktionsdatenanteil erkennbar. Die Eingabeaufforderung kann ein Anzeigen des empfangenen, aber erneut einzugebenden Teils der Transaktionsdaten umfassen.

Der Datenträger umfasst vorzugsweise eine Eingabedatenschnittstelle, über die die Eingabedaten von der Eingabeeinrichtung empfangen werden, und eine von der Eingabeschnittstelle verschiedene Transaktionsdatenschnittstelle, über die die Transaktionsdaten von dem Nutzerendgerät empfangen werden. Vorzugsweise werden die Transaktionsdaten nach einem positiven Abgleich verschlüsselt auch über die Transaktionsdatenschnittstelle und das Nutzerendgerät an die Transaktionseinrichtung weitergeleitet. Alternativ kann der Datenträger aber auch eine weitere, separate Datenkommunikationsschnittstelle umfassen, über die die verschlüsselten Transaktionsdaten an die Transaktionseinrichtung weitergeleitet werden.

Ein sicheres Transaktionsmodul ist vorzugsweise ein tragbarer Datenträger, der also reversibel mit dem Nutzerendgerät verbindbar ist. Der tragbare Datenträger wird vorzugsweise Daten kontaktbehaftet übertragen, also zumindest eine entsprechende kontaktbehaftete Schnittstelle (z.B. USB oder ISO 7816-3) haben. Er kann alternativ oder ergänzend Daten jedoch auch kontaktlos übertragen. Eine entsprechende kontaktlose Schnittstelle könnte nach dem Protokoll ISO 14443 Daten übertragen, also empfangen und/ oder senden.

Das sichere Transaktionsmodul ist so angeordnet, dass es die unveränderten Eingabedaten des Nutzers empfängt. Der Prozessor des Nutzendgerätes führt potentiell auch böswillige Software aus, somit stellt er einen unsicheren Bereich dar. Besonders sicher ist es, wenn das Transaktionsmodul zwischen der Eingabeeinrichtung des Nutzerendgerätes und dem eigentlichen Nutzendgerät (mit dem unsicheren Bereich) angeordnet ist. Insbesondere kann das Transaktionsmodul, beispielsweise mit Hilfe von 2 USB-Schnittstellen oder mit Hilfe von einer USB-Schnittstelle und einer kontaktlosen Schnittstelle, die Tastatur mit dem Nutzerendgerät verbinden. Vorteilhaft ist aber auch bereits eine Anordnung des Datenträgers in der Eingabeeinrichtung, beispielsweise in einem USB-Anschluss oder einem Kartenleser der Tastatur. Die Eingabeeinrichtung ist dabei angepasst, die unveränderten Eingabedaten an den Datenträger und an das unsichere Nutzerendgerät zu übermitteln.

In einem Endgerät mit integrierter Eingabeeinrichtung, wie beispielsweise einem Notebook, ist es theoretisch denkbar, eine Schnittstelleneinheit so zwischen der Eingabeeinheit und dem unsicheren Bereich des Endgerätes anzuordnen, dass ein tragbarer Datenträger (als sicheres Transaktionsmodul) mit der Schnittstelle reversibel verbindbar ist. Die Schnittstelleneinheit sollte so eingerichtet sein, dass insbesondere die Eingabedaten nur an den Datenträger übertragen werden, wenn dieser sich gegenüber authentisiert hat oder als anderweitig dem Endgerät und/ oder dessen Nutzer zugeordnet zu erkennen gegeben hat.

Es gibt weiterhin Nutzerendgeräte, die einen exklusiven oder bevorzugten Zugang zu ihren Komponenten ermöglichen. Beispielsweise ist es ein bekanntes Konzept in dem Nutzerendgerät eine sichere Ausführungsumgebung und eine unsichere Ausführungsumgebung vorzusehen, wobei nur die sichere Ausführungsumgebung den exklusiven oder bevorzugten Zugriff auf die Komponenten Eingabe- und Wiedergabeeinrichtung hat. Anwendungen in der sicheren Ausführungsumgebung sind somit sehr gut gegen Schadsoftware geschützt. Denkbar ist es daher ferner, das sichere Transaktionsmodul als fest in das Nutzerendgerät integriertes Hardware-Modul oder als Software-Modul in einem sicheren Bereich des Nutzerendgerätes vorzusehen. Das Nutzerendgerät ist dabei so ausgestaltet, dass die Eingabedaten unverändert von dem sicheren Transaktionsmodul empfangen werden. Vorteilhaft ist diese Ausgestaltung für eine Transaktionssoftware, die in einem unsicheren Bereich des Nutzerendgerätes (nicht gesicherte Ausführungsumgebung) ausgeführt wird. Das sichere Transaktionsmodul wird beispielsweise als Applet im sicheren Ausführungsbereich ausgeführt oder als Hardware-Modul aus dem sicheren Ausführungsbereich gesteuert. Es erhält die unveränderten Eingabedaten von der Eingabeeinrichtung und die Transaktionsdaten von der Transaktionssoftware im unsicheren Bereich. Erst nach einem erfolgreichen Datenabgleich werden die Daten transaktionsgemäß verarbeitet, also beispielsweise an die Transaktionssoftware weitergeleitet bzw. diesem bestätigt und dafür gegebenenfalls signiert oder verschlüsselt. Vorzugsweise wird die Bestätigung des Transaktionsmoduls erst in einer Transaktionseinrichtung (Server / Hintergrundsystem) geprüft. Die zuvor teils nur mit Bezug auf Datenträger dargelegten vorteilhaften Ausgestaltungen sind hier analog anwendbar.

Das Nutzerendgerät wird vom Nutzer für die Transaktion verwendet. Die Transaktionseinrichtung ist eine weitere an der Transaktion beteiligte Instanz, die vorzugsweise dem Transaktionssystembetreiber (Server / Hintergrundsystem) oder dem Transaktionspartner (Händlerterminal) zugeordnet ist. Die Eingabeeinrichtung des Nutzerendgerätes ist so ausgestaltet, dass der Nutzer Daten als Folge einzelner Zeichen eingeben kann.

Weiteren Merkmale und Vorteile der Erfindung ergeben sich aus der folgenden Beschreibung von den erfindungsgemäßen Ausführungsbeispielen sowie weiteren Ausführungsalternativen im Zusammenhang mit den Zeichnungen, die zeigen:
- Fig. 1: schematisch eine Anordnung aus einem erfindungsgemäßen portablen Datenträger, einem Nutzerendgerät, einer Eingabevorrichtung des Nutzerendgeräts und einer Transaktionseinrichtung;
- Fig. 2: schematisch die Schritte eines erfindungsgemäßen Verfahrens;
- Fig. 3a: schematisch eine typische Abfolge in der Eingabedatenzeichen, die Transaktionsdaten ergeben, eingegeben werden;
- Fig. 3b: schematisch einen Versuch einer Schadsoftware, Eingabedatenzeichen umzusortieren, um manipulierte Transaktionsdaten zu generieren;
- Fig. 4: ein Nachrichtenflussdiagramm für eine Ausgestaltung des Transaktionsmoduls in einem sicheren Bereich des Nutzerendgerätes.

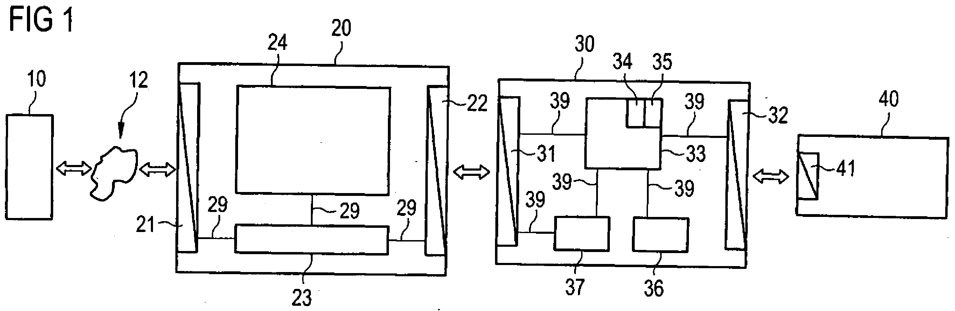

Fig. 1 zeigt ein Nutzerendgerät 20, das z.B. ein Computer, ein Laptop, ein PDA oder ein Mobilfunkendgerät sein kann. Dieses verfügt über eine Anzeigeeinrichtung 24 und eine Zentraleinheit 23, die diverse Hard- und Softwarekomponenten (nicht dargestellt), wie insbesondere einen Prozessor, umfasst. Über eine Schnittstelle 21 kann das Nutzerendgerät 20 über ein Netzwerk 12, im vorliegenden Fall das Internet, mit einer Transaktionseinrichtung 10, im vorliegenden Fall einem Transaktionsserver einer Bank, in Datenkommunikation treten. Außerdem verfügt das Nutzerendgerät 20 über eine weitere Schnittstelle 22, die im vorliegenden Ausführungsbeispiel zur Datenkommunikation mit dem portablen Datenträger 30 dient. Die Zentraleinheit 23 ist über Datenleitungen 29 mit der Anzeigeeinrichtung 24 und den Schnittstellen 21, 22 verbunden, um die Anzeigeeinrichtung 24 und die Schnittstellen 21, 22 anzusteuern.

Der portable Datenträger 30 besitzt eine Steuereinrichtung 33, die wiederum einen Prozessor (nicht dargestellt), sowie einen Positionswechselzähler 34 und einen Aktivierungswechselzähler 35 verwaltet. Der Datenträger 30 ist als so genannte "Internet Smart Card" ausgestaltet und besitzt dementsprechend einen Webserver 37, der ein Webformular zur Dateneingabe zur Verfügung stellt, das von der Anzeigeeinrichtung 24 des Nutzerendgeräts angezeigt werden kann, sowie einen Datenspeicher 36, der vorzugsweise einen nicht-flüchtigen Datenspeicher umfasst, wie z.B. einen Flash-Speicher. Auf der Steuereinrichtung 33 des Datenträgers 30 wird vorzugsweise ein sicheres Betriebssystem ausgeführt. Neben der Transaktionsdatenschnittstelle 31, die zur Datenkommunikation mit dem Nutzerendgerät 20 verwendet wird, besitzt der Datenträger 30 eine Eingabedatenschnittstelle 32 zur Datenkommunikation mit der Eingabedateneinrichtung 40.

Die Steuereinrichtung 33 ist über Datenleitungen 39 mit der Transaktionsdatenschnittstelle 31, der Eingabedatenschnittstelle 32, dem Datenspeicher 36 und dem Webserver 37 verbunden, um diese Bestandteile 31, 32, 36, 37 des Datenträgers 30 anzusteuern. Außerdem ist der Webserver 37 über eine Datenleitung 39 direkt mit der Transaktionsdatenschnittstelle 31 verbunden, um dem Nutzerendgerät 20 ein Webformular bereitzustellen, das auf der Anzeigeeinrichtung 24 des Nutzerendgeräts 20 angezeigt werden kann.

Die Eingabedateneinrichtung 40 verfügt über eine Schnittstelle 41 zur Datenkommunikation mit dem Datenträger 30 und ist im vorliegenden Ausführungsbeispiel eine Tastatur. Prinzipiell kann als Eingabedateneinrichtung 40 eine beliebige Einrichtung verwendet werden, die Eingabedaten zeichenweise zur Verfügung stellt. Vorzugsweise ist die Eingabedateneinrichtung 40 sicher, d.h. insbesondere nicht ohne weiteres durch Schadsoftware angreifbar. Als Eingabedateneinrichtung 40 kommt somit insbesondere auch eine sichere Instanz des Nutzerendgerätes 20 in Frage. Hierbei sind Ausführungsformen möglich, bei denen der Datenträger 30 lediglich die Schnittstelle 31 zur Kommunikation mit dem Nutzerendgerät benötigt und die Schnittstelle 32 entfallen kann.

Die Schnittstellen 22, 31, 32, 41 sind im vorliegenden Ausführungsbeispiel USB-Schnittstellen (Universal Serial Bus), wobei die Schnittstellen 22, 32 USB-Host-Schnittstellen sind und die Schnittstelle 31 eine USB-Hub-Schnittstelle ist.

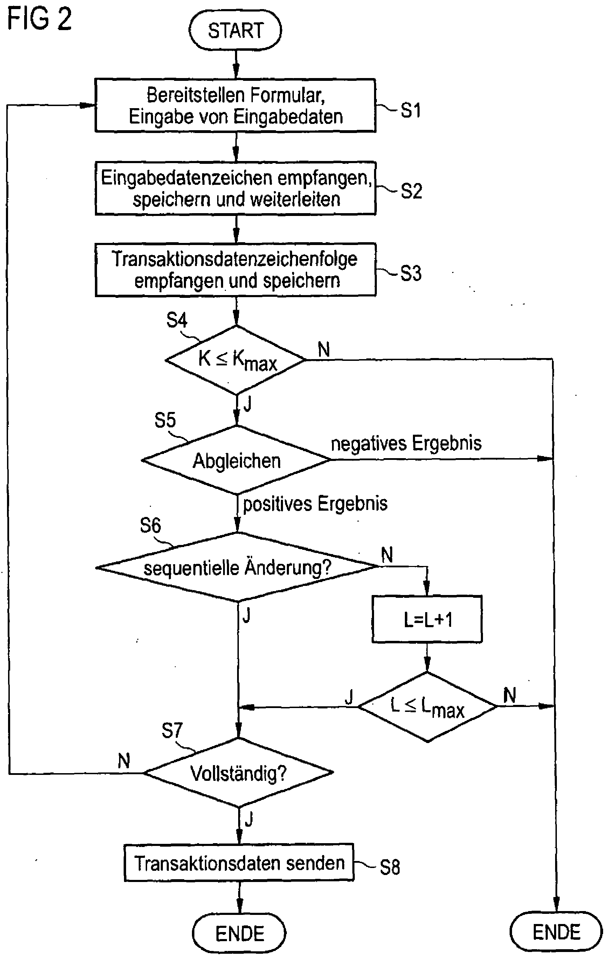

Fig. 2 zeigt schematisch die Schritte eines erfindungsgemäßen Verfahrens. In einem ersten Verfahrensschritt S1 stellt der Webserver 37 des portablen Datenträgers 30 ein Webformular zur Eingabe von Eingabedaten zur Verfügung, beispielsweise ein HTML-Formular (Hypertext Markup Language) oder dergleichen. Dieses zur Dateneingabe geeignete Webformular wird über die Transaktionsdatenschnittstelle 31 und die Schnittstelle 22 an das Nutzerendgerät 20 übertragen und dort auf der Anzeigeeinrichtung 24 dargestellt. Das Nutzerendgerät 20 verfügt hierfür über einen geeigneten Webbrowser (nicht dargestellt). Die Verbindung zwischen Webserver 37 und Webbrowser kann dabei durch eine SSL-Verbindung (Secure Sockets Layer) zusätzlich geschützt sein.

Alternativ könnte das Webformular auch von dem Nutzerendgerät 20, von der Transaktionseinrichtung 10 oder einer sonstigen Einrichtung zur Verfügung gestellt werden. Auch könnte der Webserver 37 des portablen Datenträgers als Proxy-Server dienen, der das Webformular selbst von einem weiteren Rechner, z.B. einem Transaktionsserver im Internet, zumindest teilweise empfängt und speichert. Ein von dem portablen Datenträger 30 zur Verfügung gestelltes Webformular lässt sich besonders gut vor Manipulationsversuchen schützen, da der Datenträger 30 aus vergleichsweise wenigen Komponenten besteht, die gezielt ausgewählt und konfiguriert sind, um den Datenträger 30 vor Angriffsversuchen zu schützen.

Anschließend gibt ein Nutzer mittels der Eingabedateneinrichtung 40, im vorliegenden Ausführungsbeispiel einer Tastatur, ein Eingabedatenzeichen ein. Dieses Eingabedatenzeichen wird von der Eingabedateneinrichtung 40 über die Schnittstelle 41 und die Eingabedatenschnittstelle 32 an den Datenträger 30 übertragen und im Verfahrensschritt S2 von diesem empfangen. Die Steuereinrichtung 33 des portablen Datenträgers 30 wandelt hierbei die gegebenenfalls in Form von Scan-Codes empfangenen Eingabedatenzeichen nach einer voreingestellten Ländercodetabelle in ASCII-Zeichen um. Diese ASCII-Zeichen repräsentieren die Beschriftung der Tasten der Eingabedateneinrichtung 40. Ebenso wird im Verfahrensschritt S2 das Eingabedatenzeichen durch die Steuereinrichtung 33 des portablen Datenträgers 30 sowohl in dem Datenspeicher 36 gespeichert als auch über die Transaktionsdatenschnittstelle 31 und die Schnittstelle 22 an das Nutzerendgerät 20 weitergeleitet.

Anschließend empfängt das Nutzerendgerät 20 das Eingabedatenzeichen. Falls auf dem Nutzerendgerät 20 während diesem Empfangen des Eingabedatenzeichens das Webformular (d. h. das Fenster des Webbrowsers, das das Webformular darstellt) aktiv ist, wird das Eingabedatenzeichen, beispielsweise bei der aktuellen Cursorposition, in das Webformular ggf. zwischen, vor oder hinter bereits angezeigte Transaktionsdaten eingetragen.

Ein zu dem Webformular gehöriges, auf dem Webbrowser ausgeführtes Skript sendet nach jedem Eintragen eines Eingabedatenzeichens in das Webformular das aktive Eingabefeld oder auch alle Eingabefelder oder das gesamte Formular z.B. per HTTP-Request über die Schnittstelle 22 und die Transaktionsdatenschnittstelle 31 an den Webserver 37 des Datenträgers 30. Eine solche Funktion wird zum Beispiel durch Webtechnologien wie AJAX (Asynchronous Java Script and XML) ermöglicht. Der Webserver 37 des Datenträgers 30 empfängt schließlich diese Daten.

Somit empfängt der Datenträger 30, nachdem er ein Eingabedatenzeichen empfangen, gespeichert und weitergeleitet hat (Schritt S2), ein Transaktionsdatenzeichen bzw. beim mehrmaligen Durchlaufen des Schrittes S3 eine Transaktionsdatenzeichenfolge, falls auf dem Nutzerendgerät 20 das Webformular aktiv ist. Diese Transaktionsdatenzeichenfolge wird vom Datenträger 30 in dem Datenspeicher 36 gespeichert.

Falls jedoch auf dem Nutzerendgerät 20 das Webformular während des Empfangs des Eingabedatenzeichens nicht aktiv ist, sondern ein weiteres auf der Anzeigeeinrichtung angezeigtes Applikationsfenster, wird das Eingabedatenzeichen von dieser weiteren Applikation verarbeitet und nicht in das Webformular eingetragen. In diesem Fall empfängt der Datenträger 30, nachdem er ein Eingabedatenzeichen empfangen, gespeichert und weitergeleitet hat (Schritt S2), zunächst keine entsprechende Transaktionsdatenzeichenfolge. Vielmehr wartet der Datenträger 30 auf weitere Eingabedatenzeichen, die er bei einem wiederholten Ausführen des Schritts S2 empfängt, speichert und weiterleitet. Nachdem der Datenträger 30 ggf. mehrmals den Schritts S2 ausgeführt hat, empfängt er schließlich, nachdem auf dem Nutzerendgerät 10, beispielsweise durch einen Nutzer mittels der Eingabedateneinrichtung 40 oder Zeigeeinrichtung (z.B. Computermaus, nicht dargestellt), das Webformular aktiviert wurde, im Schritt S3 eine Transaktionsdatenzeichenfolge und speichert diese in dem Datenspeicher 36.

Diese Möglichkeit, Daten in eine andere Applikation auf dem Nutzerendgerät einzugeben, könnte jedoch auch von einer Schadsoftware genutzt werden, um die Transaktionsdaten zu manipulieren. Insbesondere könnte eine Schadsoftware aus den eingegebenen Eingabedatenzeichen nur einzelne, bestimmte Eingabedatenzeichen auswählen und die restlichen Eingabedatenzeichen durch Vortäuschen eines Aktivierungswechsels zu einer anderen Applikation zu verwerfen. Um dies zu verhindern, detektiert die Steuereinrichtung 33 des Datenträgers 30 die Wechsel zwischen dem Webformular oder einem Webbrowser, der das Webformular auf der Anzeigeeinrichtung 24 des Nutzerendgeräts 20 anzeigt, und weiteren auf der Anzeigeeinrichtung 24 angezeigten Applikationsfenstern und zählt die Anzahl *K* dieser Aktivierungswechsel mittels des Aktivierungswechselzählers 35. Dementsprechend prüft der Datenträger 30 in dem Verfahrensschritt S4, ob die Anzahl der Aktivierungswechsel einen vorgegebenen Wert *K*ₘₐₓ überschreitet. Der Wert *K*ₘₐₓ beschreibt einen in der Praxis realistischen Schwellenwert für vernünftigerweise von einem Nutzer initiierte Aktivierungswechsel. Eine höhere Anzahl von Aktivierungswechseln deutet auf einen Manipulationsversuch durch Schadsoftware auf dem Nutzerendgerät 30 hin und führt daher zu einem Abbruch des Prozesses mit negativem Abgleichsergebnis.

Ein Aktivierungswechsel kann beispielsweise daran erkannt werden, dass der Datenträger 30 plötzlich keine Transaktionsdatenzeichenfolgen mehr empfängt, die bereits empfangenen und abgespeicherten Eingabedatenzeichen entsprechen, da diese nicht in das Webformular sondern in ein anderes Applikationsfenster eingegeben werden. Außerdem kann der Datenträger 30 in das Webformular eingegebene Eingabedatenanteile von in andere Applikationsfenster eingegebenen Eingabedatenanteilen daran unterscheiden, dass die Eingabedatenzeichen von in das Webformular eingegebenen Eingabedatenanteilen einem von dem Webformular für die Transaktionsdaten vorgegebenen Transaktionsdatenzeichenalphabet entsprechen. Ein von einer Zeigeeinrichtung des Nutzerendgeräts 20 bewirkter Aktivierungswechsel zwischen dem Webformular und einem weiteren Applikationsfenster kann dementsprechend daran erkannt werden, dass die Eingabedatenanteile zwischen dem vorgegebenen Transaktionsdatenzeichenalphabet, z.B. einen Ziffemalphabet oder dergleichen, und einem anderen Zeichenalphabet wechseln.

Auch können von der Eingabedateneinrichtung 40 oder ggf. von einer mit dem Datenträger 30 verbundenen Zeigeeinrichtung (nicht dargestellt) empfangene Aktivierungswechselsteueranweisungen erkannt werden, mit denen ein Aktivierungswechsel zwischen dem Webformular und weiteren auf der Anzeigeeinrichtung angezeigten Applikationsfenstern bewirkt wird, so dass daraus die tatsächlich in das Webformular eingegebenen Eingabedatenanteile abgeleitet werden können. Eine Aktivierungswechselsteueranweisung der Eingabedateneinrichtung kann z.B. eine Tastenkombination, die die ALT oder die STRG-Taste umfasst, insbesondere die Tastenkombination ALT-TAB sein, wohingegen eine Aktivierungswechselsteueranweisung der Zeigeeinrichtung z.B. ein Mausklick sein kann.

Diese verschiedenen Möglichkeiten der Erkennung eines Aktivierungswechsels ermöglichen verschiedene Ausgestaltungen des Datenträgers 30. Im einfachsten Fall werden Aktivierungswechsel bereits daran erkannt, dass der Datenträger 30 nach Weiterleiten eines Eingabedatenzeichens kein entsprechendes Transaktionsdatenzeichen empfängt. Jedoch ist es auch möglich, einen zusätzlich anhand einer von der Eingabedateneinrichtung 40 oder von einer mit dem Datenträger 30 verbundenen Zeigeeinrichtung bewirkten aktiven Aktivierungswechsel anders (d.h. als weniger kritisch) zu bewerten als einen Aktivierungswechsel, bei dem der Datenträger 30 nach Weiterleiten eines Eingabedatenzeichens kein entsprechendes Transaktionsdatenzeichen empfängt. Dies kann beispielsweise dadurch erfolgen, dass einem Aktivierungswechsel, je nachdem wie dieser detektiert wurde, eine bestimmte Punktezahl zugeordnet wird, diese Punkte gezählt werden und der Prozess bei Überschreiten einer vorgegebenen Punkteschwelle mit negativem Abgleichsergebnis abgebrochen wird.

Falls die Prüfung des Aktivierungswechselzählers (35) in Schritt S4 nicht zu einem Abbruch des erfindungsgemäßen Verfahrens führt, folgt in Schritt S5 der eigentliche Abgleich der empfangenen Eingabedaten mit den empfangenen Transaktionsdaten durch die Steuereinrichtung 33 des portablen Datenträgers 30.

Im vorliegenden Ausführungsbeispiel wird ein Eingabedatenzeichen mit einer Transaktionsdatenzeichenfolge (bzw. beim ersten Durchlaufen des Schritts S5 einem einzelnen Transaktionsdatenzeichen) abgeglichen. Hierbei werden zunächst (außer beim ersten Durchlaufen des Schritts S5) die Transaktionsdatenzeichen der empfangenen Transaktionsdatenzeichenfolge mit den Transaktionsdatenzeichen der im vorherigen Transaktionsdatenempfangsschritt empfangenen Transaktionsdatenzeichenfolge verglichen. Da im vorliegenden Ausführungsbeispiel nach dem Schritt S2 in die in dem Webformular dargestellte Transaktionsdatenzeichenfolge ein Eingabedatenzeichen eingefügt wurde, unterscheiden sich die beiden Transaktionsdatenzeichenfolgen um genau dieses eine Eingabezeichen, das als weiteres Transaktionsdatenzeichen bestimmt wird.

Dann erfolgt der Abgleich dieses bestimmten weiteren Transaktionsdatenzeichens mit dem Eingabedatenzeichen. Da im vorliegenden Ausführungsbeispiel das Eingebedatenzeichen beim Einfügen in die in dem Webformular dargestellte Transaktionsdatenzeichenfolge nicht transformiert, umgesetzt oder verschleiert wurde, besteht dieser Abgleich im vorliegenden Beispiel aus einer Identitätsprüfung. Generell kann bei dem Abgleich jegliche reproduzierbare Beziehung zwischen den Eingabedaten und den Transaktionsdaten geprüft werden. In jedem Falle wird der Prozess bei einem negativen Ergebnis eines Abgleichs mit negativem Abgleichsergebnis abgebrochen.

Hierdurch wird sichergestellt, dass die Transaktionsdatenzeichen den tatsächlich eingegebenen Eingabedatenzeichen entsprechen, um eine Manipulation durch eine Schadsoftware auf dem Nutzerendgerät 20, die die eingegebenen Eingabedatenzeichen durch andere Zeichen ersetzt, zu verhindern.

Bei einem positiven Abgleichsergebnis wird anschließend im Verfahrensschritt S6 durch die Steuereinrichtung 33 des portablen Datenträgers 30 geprüft, ob die Transaktionsdatenzeichenfolge sequentiell geändert wurde. Hierbei wird die Position des weiteren Transaktionsdatenzeichens innerhalb der empfangenen Transaktionsdatenzeichenfolge durch Vergleichen der empfangenen Transaktionsdatenzeichenfolge mit der im vorherigen Transaktionsdatenempfangsschritt empfangenen Transaktionsdatenzeichenfolge bestimmt. Falls die in einem Transaktionsdatenempfangsschritt bestimmte Position nicht auf die Position des weiteren Transaktionsdatenzeichens der im vorhergehenden Transaktionsdatenempfangsschritt empfangenen Transaktionsdatenzeichenfolge folgt, wird der Wert L eines Positionswechselzählers 34 inkrementiert (S9). Falls dann festgestellt wird (S10), dass der Positionswechselzähler 34 einen vorgegebenen Wert *L*ₘₐₓ überschreitet, wird der Prozess mit einem negativen Abgleichsergebnis abgebrochen, um zu verhindern, dass die Transaktionsdaten durch eine Schadsoftware auf dem Nutzerendgerät 20 durch Vertauschen mehrerer Transaktionsdatenzeichen manipuliert werden.

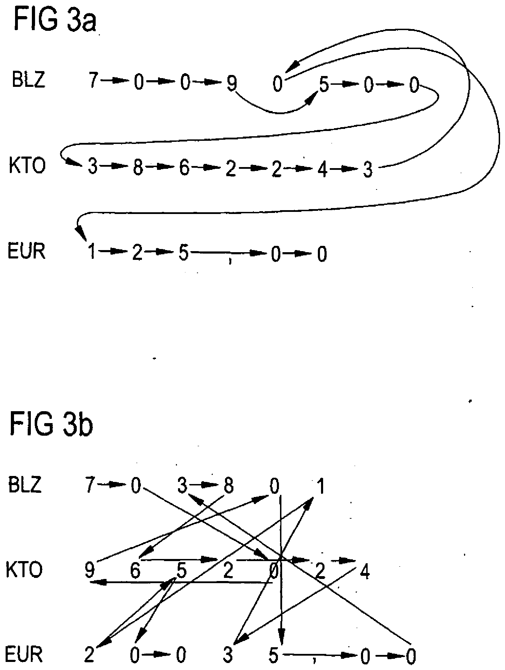

Der Wert von *L*ₘₐₓ wird dabei so festgelegt, dass eine realistische Anzahl an Korrekturen möglich bleibt (z.B.1, 2 oder 3 Korrekturen). Es wird also geprüft, ob die Zahl der nicht aufeinanderfolgend eingefügten Transaktionsdatenzeichen durch eine realistische Anzahl von Korrekturen bei der Dateneingabe bedingt sein kann oder auf eine Datenmanipulation seitens einer Schadsoftware auf dem Nutzerendgerät 20 hindeutet. Für eine für einen Angreifer sinnvolle Datenmanipulation sind in der Regel wesentlich mehr Positionswechsel erforderlich, als bei einer gewöhnlichen Dateneingabe durch Korrektur von Eingabefehlern auftreten. Dies ist beispielhaft in Fig. 3 dargestellt.

Fig. 3a zeigt schematisch eine Abfolge, in der ein Nutzer Transaktionsdaten eingibt. Die für eine Banktransaktion notwendigen Eingabedaten (BLZ: Bankleitzahl, KTO: Kontonummer des Überweisungsempfängers, EUR: zu überweisender Betrag) werden in der Regel sequentiell eingegeben, so wie es durch die Pfeile veranschaulicht wird. Bei der Dateneingabe der Bankleitzahl vergisst der Nutzer jedoch zunächst die Eingabe einer "0", die er dann nach vollständiger Eingabe der Kontonummer eingibt. Somit ergeben sich bei diesem Beispiel zwei zu protokollierende Positionswechsel: Der Wechsel von der letzten Ziffern der Kontonummer zu der fünften Ziffer der Bankleitzahl und der anschließende Wechsel zu der ersten Ziffer des zu überweisenden Betrags.

In Fig. 3b ist hingegen der Versuch einer Schadsoftware skizziert, die Transaktionsdaten von Fig. 3a umzusortieren, um so manipulierte Transaktionsdaten zu erzeugen, die beispielsweise eine unerwünschte Transaktion zugunsten des nichtberechtigten Dritten definieren. Um eine für einen Angreifer sinnvolle Transaktion zu bewirken, muss die Schadsoftware, wie durch die Pfeile veranschaulicht, diverse Eingabedatenzeichen vertauschen und Permutationen vornehmen. Es ergibt sich damit eine weitaus höhere Anzahl an Positionswechseln als in Fig. 3a.

Zusätzlich ist es auch möglich, von der Eingabedateneinrichtung 40, z.B. durch Betätigen der Pfeiltasten, bewirkte Positionswechsel zu erkennen und besonders zu behandeln, beispielsweise den Wert L des Positionswechselzählers 34 bei einem durch die Eingabedateneinrichtung bewirkten Positionswechsel nicht zu inkrementieren oder, wie zuvor im Zusammenhang mit Aktivierungswechseln dargestellt, den Positionswechsel durch Zuweisung einer bestimmten Punktezahl als weniger kritisch zu gewichten.

Bei sequentieller Änderung der Transaktionsdatenzeichenfolge oder falls der Positionswechselzähler 34 den vorgegebenen Wert *L*ₘₐₓ nicht überschreitet, wird im nächsten Verfahrensschritt S7 durch die Steuereinrichtung 33 des portablen Datenträgers 30 geprüft, ob der empfangene Transaktionsdatenanteil eine von der Transaktionseinrichtung 10 ausführbare Transaktion vollständig definiert. Generell kann beliebig festgelegt werden, wann ein Transaktionsdatenanteil eine von der Transaktionseinrichtung 10 ausführbare Transaktion vollständig definiert. Im vorliegenden Ausführungsbeispiel definiert ein Transaktionsdatenanteil eine von der Transaktionseinrichtung 10 ausführbare Transaktion vollständig, wenn er alle zur Ausführung der Transaktion notwendigen Daten umfasst. Im Falle einer Überweisung können die notwendigen Daten beispielsweise die Bankleitzahl und die Kontonummer des Überweisungsempfängers sowie eine PIN (Persönliche Identifikationsnummer) und eine TAN (Transaktionsnummer) sein. Bei einer abgeänderten Ausführungsform kann die Eingabe einer TAN auf Grund der hohen Sicherheit des vorliegenden Verfahrens auch entfallen.

Falls die Vollständigkeitsprüfung in Schritt S7 ergibt, dass der Transaktionsdatenanteil noch keine von der Transaktionseinrichtung 10 ausführbare Transaktion vollständig definiert, werden die Verfahrensschritte S1 bis S7 erneut durchlaufen, bis ein Abbruch des Verfahrens bei einem der Schritte S4 bis S6 erfolgt oder die Vollständigkeitsprüfung in Schritt S7 ein positives Ergebnis ergibt.

Falls die Vollständigkeitsprüfung in Schritt S7 ergibt, dass der Transaktionsdatenanteil eine von der Transaktionseinrichtung 10 ausführbare Transaktion vollständig definiert, leitet die Steuereinrichtung 33 den Transaktionsdatenanteil als Transaktionsdaten verschlüsselt an den Transaktionsserver 10, z.B. einen zentraleri Server einer Bank, weiter. Im vorliegenden Ausführungsbeispiel werden diese Transaktionsdaten über die Transaktionsdatenschnittstelle 31 und die Schnittstelle 22 verschlüsselt an das Nutzerendgerät 20 weitergeleitet, das diese Transaktionsdaten dann wiederum über die Schnittstelle 21 über ein Netzwerk 12 (im vorliegenden Ausführungsbeispiel das Internet) verschlüsselt an den Transaktionsserver 10 weiterleitet. Hierdurch kann eine bestehende Internetverbindung des Nutzerendgerätes 20 genutzt werden. Alternativ kann der Datenträger 30 auch über eine weitere, separate Schnittstelle verfügen, mittels der die Daten ohne Umweg über das Nutzerendgerät 20, z.B. über einen direkten Internetzugang über eine Kontaktlosschnittstelle oder dergleichen, an die Transaktionseinrichtung 10 weitergeleitet werden können.

Zum Weiterleiten der Transaktionsdaten kann zusätzlich noch eine Bestätigung des Benutzers notwendig sein, die beispielsweise mittels der Eingabedateneinrichtung 40 oder einer mit dem Datenträger 30 oder dem Nutzerendgerät 20 verbundenen Zeigeeinrichtung erfolgen kann.

Das beschriebene Verfahren kann auch durch die Eingabedateneinrichtung 40 ausgegebene Löschanweisungen (z.B. eine Betätigung der Rücktaste) als Löschzeichen verarbeiten. Im Fall eines in das Webformular "eingegebenen" Löschzeichens liefert der Abgleich in Schritt S5 ein positives Abgleichsergebnis, wenn der Vergleich der Transaktionsdatenzeichen der empfangenen Transaktionsdatenzeichenfolge mit den Transaktionsdatenzeichen der im vorherigen Transaktionsdatenempfangsschritt empfangenen Transaktionsdatenzeichenfolge ergibt, dass die empfangenen Transaktionsdatenzeichenfolge ein Transaktionsdatenzeichen weniger enthält.

Gemäß einer besonderen Ausgestaltung empfängt der Datenträger 30 im Verfahrensschritt S2 jeweils eine Eingabedatenzeichenfolge oder empfängt mehrere Eingabedatenzeichen und kombiniert diese zu einer Eingabedatenzeichenfolge. Dementsprechend speichert der Datenträger 30 diese Eingabedatenzeichenfolge und leitet sie weiter. Ebenso ist es möglich, dass das auf dem Nutzerendgerät 20 ausgeführte Skript nicht nach jedem empfangenen Eingabedatendatenzeichen eine Transaktionsdatenzeichenfolge an den Datenträger zurücksendet, sondern erst nach mehreren empfangenen Transaktionsdatenzeichen.

Wie bereits im Zusammenhang mit der Überwachung von Aktivierungswechseln dargestellt, kann der Datenträger 30 eine Schnittstelle zum Anschluss eines Zeigegerätes, z.B. einer Computermaus, besitzen. Durch Überwachung der von dem Zeigegerät generierten Daten können neben Informationen über Applikationswechsel weitere Informationen gewonnen und zu einer Prüfung der Transaktionsdaten verwendet werden, beispielsweise Informationen über Korrekturen bei der Dateneingabe.

Gemäß einer weiteren Ausführungsform kann zusätzlich vorgesehen sein, dass die Steuereinrichtung 33 des portablen Datenträgers 30 Informationen auf einer Informationsanzeige des Datenträgers 30 ausgibt. Diese Informationen können beispielsweise Statusinformationen des portablen Datenträgers 30, wie Informationen über die Verschlüsselung, über zurückliegende Transaktionen und Transaktionsabbrüche oder über die Konfiguration des Datenträgers 30 sein. Eine solche Informationsanzeige kann beispielsweise ein Display, insbesondere ein LCD-Display der Eingabedateneinrichtung 40 oder des Datenträgers 30 oder auch eine auf der Anzeigeeinrichtung 24 des Nutzerendgeräts 20 dargestellte Webseite sein. Zudem kann vorgesehen sein, den Datenträger 30 mittels der Informationsanzeige und der Eingabedateneinrichtung 40 und/oder einer mit dem Datenträger 30 oder dem Nutzerendgerät 20 verbundenen Zeigeeinrichtung zu konfigurieren.

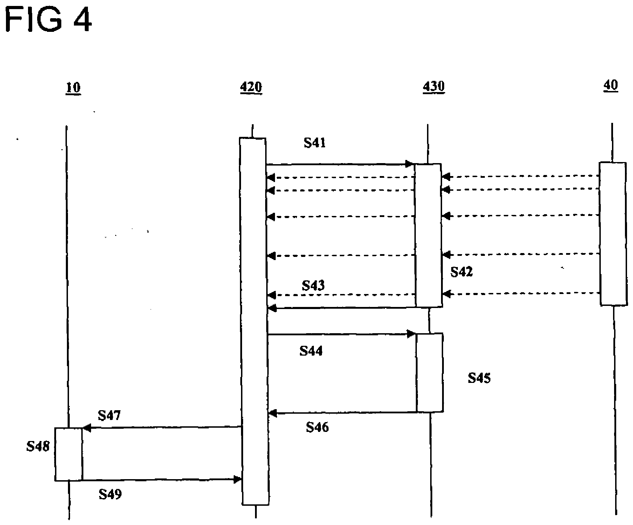

Fig. 4 zeigt eine weitere Ausführungsform, in welcher das sichere Transaktionsmodul als Trustlet 530 in einem sicheren Bereich (TrustZone) des Nutzerendgerätes angeordnet ist.

Eine Transaktionssoftware 520 wird in der unsicheren Umgebung des Nutzerendgerätes (NormalZone) ausgeführt. Die Transaktionssoftware 520 fordert das Trustlet 530 auf S41, die folgenden Eingabedaten mit zu protokollieren. Danach empfängt und speichert S42 das Trustlet 530 die vom Nutzer auf der Tastatur 40 eingegebenen (unveränderten) Eingabedaten. Die Eingabedaten werden von dem Trustlet 530 oder der sicheren Ausführungsumgebung (laufend oder blockweise) an die Transaktionssoftware 520 weitergeleitet S43. Nach dem Ende der Dateneingabe sendet S44 die Transaktionssoftware 520 die in der NormalZone angekommenen, also gegebenenfalls manipulierten, vorzugsweise vollständigen Transaktionsdaten an das Trustlet 530. Das Trustlet 530 gleicht die empfangenen Transaktionsdaten mit den gespeicherten Eingangsdaten ab S45. Dabei kann wie zu Fig. 2 beschrieben vorgegangen werden und optional Kriterien für Abfolgeänderungen, Aktivierungswechsel (Alt-Tab) und/oder Einfügeanweisungen (Strg-V) berücksichtigt werden. Bei einem positiven Ergebnis des Abgleichs werden die eingegebenen Daten und/oder eine Bestätigung des erfolgreichen Vergleiches an die Transaktionssoftware 520 übertragen S46. Die Bestätigung kann mit einem privaten (asymmetrischen) Schlüssel verschlüsselt und/ oder signiert sein. Die Transaktionssoftware 520 in der NormalZone gibt die Bestätigung als Beweis der Richtigkeit an ein Hintergrundsystem 10 weiter S47, welches die Daten der Transaktion entschlüsselt und/ oder deren Signatur prüft S48. Bei erfolgreicher Prüfung wird die Transaktion ausgeführt und ansonsten zurückgewiesen. Die Transationssoftware 520 erhält eine entsprechende Rückmeldung in Schritt S49.

Durch dieses Verfahren ist es einem Angreifer in der NormalZone nicht möglich, die eingegebenen Daten zu manipulieren. Bei einer Manipulation während der Eingabe der Transaktionsdaten fällt diese im Schritt S45 des Abgleichens auf. Bei einer Manipulation nach Schritt S45 fällt der Angriff in Schritt S48 auf. Zudem kann das Hintergrundsystem 10 anhand der signierten/verschlüsselten Daten den Absender der Transaktion verifizieren.

## Patentansprüche

1. Verfahren zur Absicherung einer Transaktion, die ein Nutzer durch seine Eingaben definiert, umfassend die folgenden Schritte in einem sicheren Transaktionsmodul (30):
Empfangen (S2) von Eingabedaten von einer Eingabeeinrichtung (40) eines Nutzerendgeräts (20);
transaktionsgemäßes Verarbeiten (S8) von Transaktionsdaten, wenn eine vorgegebene Bedingung erfüllt ist;
Abgleichen (S5) der angeblich vom Nutzer eingegebenen, zu verarbeitenden Transaktionsdaten mit den empfangenen, tatsächlich vom Nutzer eingegebenen Eingabedaten, wobei ein positives Abgleichsergebnis die vorgegebene Bedingung ist; **dadurch gekennzeichnet, dass** in einem ersten Transaktionsdatenempfangsschritt ein Transaktionsdatenzeichen empfangen wird und in jedem weiteren Transaktionsdatenempfangsschritt eine Transaktionsdatenzeichenfolge empfangen wird, die die Transaktionsdatenzeichen der im vorhergehenden Transaktionsdatenempfangsschritt empfangenen Transaktionsdatenzeichenfolge und ein weiteres Transaktionsdatenzeichen umfasst, und dass in einer in einem Transaktionsdatenempfangsschritt empfangenen Transaktionsdatenzeichenfolge das weitere Transaktionsdatenzeichen durch Vergleichen der Transaktionsdatenzeichen der empfangenen Transaktionsdatenzeichenfolge mit den Transaktionsdatenzeichen der im vorherigen Transaktionsdatenempfangsschritt empfangenen Transaktionsdatenzeichenfolge bestimmt wird, und das bestimmte, weitere Transaktionsdatenzeichen mit einem entsprechenden als Eingabedaten empfangenen Eingabedatenzeichen abgeglichen wird.

2. Verfahren nach Anspruch 1, **gekennzeichnet durch**, Empfangen (S3) der zu verarbeitenden Transaktionsdaten in dem Transaktionsmodul (30).

3. Verfahren nach Anspruch 1 oder 2 **dadurch gekennzeichnet, dass** der Schritt des Abgleichens (S5) ein positives Abgleichsergebnis ergibt, wenn die Transaktionsdatenzeichen der Transaktionsdaten als Eingabedatenzeichen in den Eingabedaten enthalten sind, insbesondere auch dann wenn die Abfolge der Zeichen in den Eingabedaten und den Transaktionsdaten nicht identisch ist.

4. Verfahren nach einem der Ansprüche 1 bis 3 **dadurch gekennzeichnet, dass** geprüft wird, ob die Abfolge der Transaktionsdatenzeichen in den Transaktionsdaten gegenüber einer abweichenden Abfolge der entsprechenden Zeichen in den Eingabedaten ein vorbestimmtes Kriterium erfüllt.

5. Verfahren nach einem der vorhergehenden Ansprüche, **dadurch gekennzeichnet, dass** in mehreren Eingabedatenempfangsschritten Eingabedatenanteile der Eingabedaten empfangen werden und zumindest ein Transaktionsdatenanteil der Transaktionsdaten in zumindest einem Transaktionsdatenempfangsschritt empfangen wird, wobei die Transaktionsdaten mit den mehrere Eingabedatenanteile umfassenden Eingabedaten abgeglichen werden.

6. Verfahren nach Anspruch 5, **dadurch gekennzeichnet, dass** die Transaktionsdatenanteile mit jeweils entsprechenden Eingabedatenanteilen abgeglichen werden, wobei vorzugsweise als Eingabedatenanteil zumindest ein Eingabedatenzeichen der Eingabedaten und/oder als Transaktionsdatenanteil zumindest ein Transaktionsdatenzeichen der Transaktionsdaten empfangen wird.

7. Verfahren nach einem der Ansprüche 1 bis 6, **dadurch gekennzeichnet, dass** die Eingabedaten zur Anzeige auf einer Anzeigeeinrichtung (24) des Nutzerendgeräts (20) weitergeleitet werden und die Transaktionsdaten über ein Webformular empfangen werden, das ein Webserver (37) des Datenträgers (30) zur Anzeige auf einer Anzeigeeinrichtung (24) des Nutzerendgeräts (20) bereitstellt, wobei nur solche Eingabedaten bei einem Abgleich der Transaktionsdaten berücksichtigt werden, die in das Webformular eingegeben wurden.

8. Verfahren nach einem der vorhergehenden Ansprüche, **dadurch gekennzeichnet, dass** ein Aktivierungswechselzähler (35) inkrementiert wird, sofern ein Aktivierungswechsel erkannt wird, wobei der Abgleich der Transaktionsdaten mit den empfangenen Eingabedaten mit einem negativen Abgleichsergebnis abgebrochen wird, sofern der Aktivierungswechselzähler (35) einen vorgegebenen Wert überschreitet.

9. Verfahren nach einem der Ansprüche 1 bis 8, **dadurch gekennzeichnet, dass** über eine Eingabedatenschnittstelle (32) des Datenträgers (30) die Eingabedaten empfangen werden und über eine von der Eingabedatenschnittstelle (32) verschiedene Transaktionsdatenschnittstelle (31) die Eingabedaten weitergeleitet und die Transaktionsdaten empfangen werden, wobei die Transaktionsdaten bei einem positiven Abgleichsergebnis verschlüsselt werden und über die Transaktionsdatenschnittstelle (31) oder über eine zusätzliche Datenkommunikationsschnittstelle an die Transaktionseinrichtung weitergeleitet werden.

10. Verfahren nach einem der Ansprüche 1 bis 9, **dadurch gekennzeichnet, dass** die Eingabedaten auf Einfügeanweisungen (STRG-V) geprüft werden.

11. Verfahren nach einem der Ansprüche 1 bis 10, **dadurch gekennzeichnet, dass** der Nutzer aufgefordert wird, einen ausgewählten Teil der empfangenen Transaktionsdaten in die Eingabeeinrichtung (40) des Nutzerendgeräts (20) erneut einzugeben.

12. Sicheres Transaktionsmodul, welches eingerichtet ist, ein Verfahren nach einem der Ansprüche 1 bis 11 auszuführen.

13. Portabler Datenträger (30), zumindest umfassend einen Prozessor, einen Datenspeicher (36) sowie eine Steuereinrichtung (33), die eingerichtet ist, von einer mit dem Datenträger (30) verbundenen Eingabedateneinrichtung (40) empfangene Eingabedaten an ein mit dem Datenträger (30) verbundenes Nutzerendgerät (20) weiterzuleiten, **dadurch gekennzeichnet, dass** die Steuereinrichtung (33) weiterhin eingerichtet ist, ein Verfahren nach einem der Ansprüche 1 bis 11 auszuführen.

## Claims

1. A method for securing a transaction defined by a user through his inputs, comprising the following steps in a secure transaction module (30):
receiving (S2) of input data from an input device (40) of a user terminal (20);
processing (S8) in accordance with the transaction of transaction data when a predetermined condition is fulfilled;
matching (S5) of the transaction data to be processed allegedly input by the user with the received input data actually input by the user, wherein a positive matching result is the predetermined condition; **characterized in that** in a first transaction data reception step, a transaction data character is received and in each further transaction data reception step a transaction data character sequence is received which comprises the transaction data characters of the transaction data character sequence received in the preceding transaction data reception step and a further transaction data character, and that in a transaction data character sequence received in a transaction data reception step the further transaction data character is determined by comparing the transaction data characters of the received transaction data character sequence with the transaction data characters of the transaction data character sequence received in the preceding transaction data reception step, and the determined, further transaction data character is matched with a corresponding input data character received as input data.

2. The method according to claim 1, **characterized by** receiving (S3) the transaction data to be processed in the transaction module (30).

3. The method according to claim 1 or 2, **characterized in that** the step of matching (S5) yields a positive matching result when the transaction data characters of the transaction data are included as input data characters in the input data, in particular also when the sequence of characters in the input data and the transaction data is not identical.

4. The method according to any of the claims 1 to 3, **characterized in that** it is checked whether the sequence of the transaction data characters in the transaction data fulfills a predetermined criterion relative to a diverging sequence of the corresponding characters in the input data.

5. The method according to any of the preceding claims, **characterized in that** in a plurality of input data reception steps input data portions of the input data are received and at least one transaction data portion of the transaction data is received in at least one transaction data reception step, wherein the transaction data are matched with the input data comprising a plurality of input data portions.

6. The method according to claim 5, **characterized in that** the transaction data portions are matched with respectively corresponding input data portions, wherein there is preferably received at least one input data character of the input data as input data portion and/or at least one transaction data character of the transaction data as transaction data portion.

7. The method according to any of the claims 1 to 6, **characterized in that** the input data are forwarded for displaying on a display device (24) of the user terminal (20) and the transaction data are received via a web form made available by a web server (37) of the data carrier (30) for displaying on a display device (24) of the user terminal (20), wherein only such input data are taken into account in a matching of the transaction data which have been input in the web form.

8. The method according to any of the preceding claims, **characterized in that** an activation change counter (35) is incremented, if an activation change is detected, wherein the matching of the transaction data with the received input data is aborted with a negative matching result, if the activation change counter (35) exceeds a predetermined value.

9. The method according to any of the claims 1 to 8, **characterized in that** via an input data interface (32) of the data carrier (30) the input data are received and the input data are forwarded and the transaction data are received via a transaction data interface (31) different from the input data interface (32), wherein, when the matching result is positive, the transaction data are encrypted and forwarded to the transaction device via the transaction data interface (31) or via an additional data communication interface.

10. The method according to any of the claims 1 to 9, **characterized in that** the input data are checked for insert instructions (CTRL-V).

11. The method according to any of the claims 1 to 10, **characterized in that** the user is prompted to input a selected portion of the received transaction data in the input device (40) of the user terminal (20) again.

12. A secure transaction module adapted to execute a method according to any of the claims 1 to 11.

13. A portable data carrier (30), comprising at least a processor, a data memory (36) and a control device (33) which is adapted to forward input data received from an input data device (40) connected with the data carrier (30) to a user terminal (20) connected with the data carrier (30), **characterized in that** the control device (33) is further adapted to execute a method according to any of the claims 1 to 11.

## Revendications

1. Procédé de protection d'une transaction qu'un utilisateur définit par ses entrées, comprenant les étapes suivantes dans un module de transaction (30) sécurisé:
réception (S2) de données d'entrée par un dispositif d'entrée (40) d'un terminal d'utilisateur (20);
traitement, conforme à la transaction (S8), de données de transaction quand une condition prescrite est remplie;
comparaison (S5) des données de transaction à traiter prétendument entrées par l'utilisateur avec les données d'entrée effectivement entrées par l'utilisateur reçues, un résultat de comparaison positif étant la condition prescrite; **caractérisé en ce que**, lors d'une première étape de réception de données de transaction, un signe de données de transaction est reçu, et que, lors de chaque étape subséquente de réception de données de transaction, une suite de signes de données de transaction comprenant les signes de données de transaction de la suite de signes de données de transaction reçue lors de l'étape précédente de réception de données de transaction et un signe subséquent de données de transaction est reçue, et **en ce que**, dans une suite de signes de données de transaction reçue lors d'une étape de réception de données de transaction, le signe subséquent de données de transaction est déterminé par comparaison des signes de données de transaction de la suite de signes de données de transaction reçue avec les signes de données de transaction de la suite de signes de données de transaction reçue lors de l'étape précédente de réception de données de transaction, et **en ce que** le signe subséquent déterminé de données de transaction est comparé avec un signe de données de transaction correspondant reçu en tant que données d'entrée.

2. Procédé selon la revendication 1, **caractérisé par** la réception (S3), dans le module de transaction (30), des données de transaction à traiter.

3. Procédé selon la revendication 1 ou 2, **caractérisé en ce que** l'étape de la comparaison (S5) aboutit à un résultat de comparaison positif quand les signes de données de transaction des données de transaction sont contenus en tant que signes de données d'entrée dans les données d'entrée, en particulier aussi dans le cas où la suite des signes n'est pas identique dans les données d'entrée et dans les données de transaction.

4. Procédé selon une des revendications de 1 à 3, **caractérisé en ce qu'**il est vérifié si la suite des signes de données de transaction dans les données de transaction remplit, par rapport à une suite divergente des signes correspondants dans les données d'entrée, un critère prédéterminé.

5. Procédé selon une des revendications précédentes, **caractérisé en ce que**, dans plusieurs étapes de réception de données d'entrée, des parts de données d'entrée des données d'entrée sont reçues et au moins une part de données de transaction des données de transaction est reçue lors d'au moins une étape de réception de données de transaction, les données de transaction étant comparées avec les données d'entrée comprenant plusieurs parts de données d'entrée.

6. Procédé selon la revendication 5, **caractérisé en ce que** les parts de données de transaction sont comparées avec des parts de données d'entrée respectivement correspondantes, cependant que, de préférence, en tant que part de données d'entrée, c'est au moins un signe de données d'entrée des données d'entrée et/ou, en tant que part de données de transaction, c'est au moins un signe de données de transaction des données de transaction qui est reçu.

7. Procédé selon une des revendications de 1 à 6, **caractérisé en ce que** les données d'entrée sont transférées pour affichage sur un dispositif d'affichage (24) du terminal d'utilisateur (20) et les données de transaction sont reçues par l'intermédiaire d'un formulaire web qu'un serveur web (37) du support de données (30) met à disposition pour affichage sur un dispositif d'affichage (24) du terminal d'utilisateur (20), cependant que seules les données d'entrée ayant été entrées dans le formulaire web sont prises en considération lors d'une comparaison des données de transaction.

8. Procédé selon une des revendications précédentes, **caractérisé en ce qu'**un compteur de changement d'activation (35) est incrémenté dès lors qu'un changement d'activation est reconnu, la comparaison des données de transaction avec les données d'entrée reçues aboutissant à un résultat de comparaison négatif étant arrêtée dès lors que le compteur de changement d'activation (35) dépasse une valeur prescrite.

9. Procédé selon une des revendications de 1 à 8, **caractérisé en ce que**, par l'intermédiaire d'une interface de données d'entrée (32) du support de données (30), les données d'entrée sont reçues et, par l'intermédiaire d'une interface de données de transaction (31) différente de l'interface de données d'entrée (32), les données d'entrée sont transférées et les données de transaction sont reçues, cependant que les données de transaction sont cryptées en cas de résultat de comparaison positif et sont, par l'intermédiaire de l'interface de données de transaction (31) ou par l'intermédiaire d'un interface supplémentaire de communication de données, transférées au dispositif de transaction.

10. Procédé selon une des revendications de 1 à 9, **caractérisé en ce que** les données d'entrée (32) sont vérifiées pour déceler des instructions d'insertion (STRG-V).

11. Procédé selon une des revendications de 1 à 10, **caractérisé en ce que** l'utilisateur est invité à entrer à nouveau dans le dispositif d'entrée (40) du terminal d'utilisateur (20) une partie sélectionnée des données de transaction reçues.

12. Module de transaction sécurisé qui est configuré pour exécuter un procédé selon une des revendications de 1 à 11.

13. Support de données (30) portable, au moins comprenant un processeur, une mémoire de données (36) ainsi qu'un dispositif de commande (33), qui est configuré pour transférer à un terminal d'utilisateur (20) relié au support de données (30) des données d'entrée reçues par un dispositif de données d'entrée (40) relié au support de données (30), **caractérisé en ce que** le dispositif de commande (33) est en outre configuré pour exécuter un procédé selon une des revendications de 1 à 11.
